(19) Europäisches Patentamt / European Patent Office / Office européen des brevets

(11) EP 2 068 568 A2

(12) **EUROPEAN PATENT APPLICATION**

(43) Date of publication:
    **10.06.2009 Bulletin 2009/24**

(51) Int Cl.:
    ***H04N 9/31*** (2006.01)     ***H04N 9/64*** (2006.01)

(21) Application number: **08020836.6**

(22) Date of filing: **01.12.2008**

(84) Designated Contracting States:
    **AT BE BG CH CY CZ DE DK EE ES FI FR GB GR HR HU IE IS IT LI LT LU LV MC MT NL NO PL PT RO SE SI SK TR**
    Designated Extension States:
    **AL BA MK RS**

(30) Priority: **29.11.2007 JP 2007309352**

(71) Applicant: **Sanyo Electric Co., Ltd.**
    **Osaka 570-8677 (JP)**

(72) Inventors:
    • **Abe, Takaaki**
        **Osaka 570-8677 (JP)**

    • **Inoue, Masutaka**
        **Osaka 570-8677 (JP)**
    • **Tanase, Susumu**
        **Osaka 570-8677 (JP)**
    • **Haraguchi, Masahiro**
        **Osaka 570-8677 (JP)**

(74) Representative: **Glawe, Delfs, Moll**
    **Patentanwälte**
    **Rothenbaumchaussee 58**
    **20148 Hamburg (DE)**

(54) **Image signal converting apparatus and image display apparatus**

(57)    The controlling unit (130) generates an image output signal based on an image input signal. The fourth color component light is substitutable by substitution component light composed of any two of the red component light, the green component light, and the blue component light. The controlling unit (130), according to a light amount of the fourth color component light, subtraction processing on a subtraction target signal that is input signal constituting a part of the image input signal and corresponding to the substitution component light, and the controlling unit (130) generates an output signal constituting a part of the image output signal and corresponding to the substitution component light.

FIG. 4

**Description**

BACKGROUND OF THE INVENTION

Field of the Invention

The present invention relates to an image signal converting apparatus and an image display apparatus, each generating a red output signal, a green output signal, and a blue output signal based on a red input signal, a green input signal, and a blue input signal, respectively.

Description of the Related Art

A three-panel image display apparatus has heretofore been widely known which includes a red light imager modulating red component light, a green light imager modulating green component light, and a blue light imager modulating blue component light.

In order to separate white light emitted from a light source, such an image display apparatus may use a method of separating the white light so as to preferentially increase a light amount of red component light, or to preferentially increase a light amount of green component light, or a similar method. When a light amount of red component light is preferentially increased, a waveband of red component light is extended to the short wavelength side, so that color reproduced by the red component light becomes orange. Meanwhile, when a light amount of green component light is preferentially increased, a waveband of green component light is extended to the long wavelength side, so that color reproduced by the green component light becomes yellowish green. Consequently, purities of colors reproduced by red component light, green component light, and blue component light are degraded.

In the meantime, a projection display apparatus intended to improve color purities has been proposed (e.g., Japanese Patent Application Publication No. 2001-186539, in particular claim 1, [0028], Fig. 6, and the like). Specifically, in this projection display apparatus, a light amount of color component light (e.g., yellow component light Ye) having a specific wavelength is reduced from one of red component light and green component light, while a light amount of blue component light other than the red component light and the green component light is increased.

That is, a predetermined value is reduced from any one of a red input signal and a green input signal, and then, a predetermined value is added to a blue input signal. Thus, the deterioration of color purity is restrained.

However, there has been a problem that the saturation of an image is decreased when a light amount of blue component light emitted from a blue light imager is increased.

It is an object of this invention to provide an improved image signal converting apparatus that lessens this drawback.

The solution resides in the features of the independent claim and preferably in those of the dependent claims.

A first aspect of an image signal converting apparatus of the present invention is as follows. The image signal converting apparatus is used in an image display apparatus (a projection display apparatus) having a light source which emits light including red component light, green component light, blue component light, and fourth color component light. The image signal converting apparatus includes a controlling unit configured to generate an image output signal based on an image input signal. The image input signal includes a red input signal corresponding to the red component light, a green input signal corresponding to the green component light, and a blue input signal corresponding to the blue component light. The image output signal includes a red output signal corresponding to the red component light, a green output signal corresponding to the green component light, and a blue output signal corresponding to the blue component light. The fourth color component light is substitutable by substitution component light composed of any two of the red component light, the green component light, and the blue component light. The controlling unit performs, according to a light amount of the fourth color component light, subtraction processing on a subtraction target signal that is an input signal constituting a part of the image input signal and corresponding to the substitution component light, and the controlling unit generates an output signal constituting a part of the image output signal and corresponding to the substitution component light.

According to the first aspect, the controlling unit performs subtraction processing on the subtraction target signal according to the light amount of the fourth color component light, and the controlling unit generates the output signal corresponding to the substitution component light. Therefore, it becomes possible to restrain not only the deterioration of color purity, but also the deterioration of saturation.

In the first aspect, according to a subtraction result of the subtraction target signal, the controlling unit performs addition processing on an addition target signal that is an input signal constituting a part of the image input signal and corresponding to color component light other than the substitution component light, and the controlling unit generates an output signal constituting a part of the image output signal and corresponding to the color component light other than the substitution component light.

A second aspect of an image display apparatus is as follows. The image display apparatus includes: a light source configured to emit light including red component light, green component light, blue component light, and fourth color component light; a controlling unit configured to control an image output signal based on an image input signal; and an image display unit configured to display an image based on the image output signal. The image input signal includes a red input signal corresponding to the red component light, a green input signal corresponding to the green component light, and a blue input signal corresponding to the blue component light. The image output signal includes a red output signal corresponding to the red component light, a green output signal corresponding to the green component light, and a blue output signal corresponding to the blue component light. The fourth color component light is substitutable by substitution component light composed of any two of the red component light, the green component light, and the blue component light. The controlling unit performs, according to a light amount of the fourth color component light, subtraction processing on subtraction a target signal that is an input signal constituting a part of the image input signal and corresponding to the substitution component light, and the controlling unit generates an output signal constituting a part of the image output signal and corresponding to the substitution component light.

BRIEF DESCRIPTION OF THE DRAWINGS

Fig. 1 is a diagram showing a projection display apparatus 100 of a first embodiment;

Fig. 2A and 2B are diagrams showing wavebands of color component light of the first embodiment;

Fig. 3 is a diagram showing a color reproduction range of the first embodiment;

Fig. 4 is a block diagram showing a controlling unit 130 of the first embodiment;

Fig. 5 is a diagram showing a method of acquiring a virtual signal Ye1 of the first embodiment; and

Fig. 6 is a relationship among first and second examples of a comparative method, and the first embodiment.

DETAILED DESCRIPTION OF THE PREFERRED EMBODIMENTS

Projection display apparatus of the embodiments of the present invention are described below with reference to the accompanying drawings. Throughout the drawings, identical or similar parts are denoted by identical or similar reference numerals.

It should be noted that, however, that the drawings are diagrammatic, and therefore dimensions and ratios are different from actual ones. Therefore, specific dimensions and the like should be determined based on the following description. Naturally, the dimensional relationships and dimensional ratios may be different from one drawing to another in some parts.

[First Embodiment]

(Projection Display Apparatus)

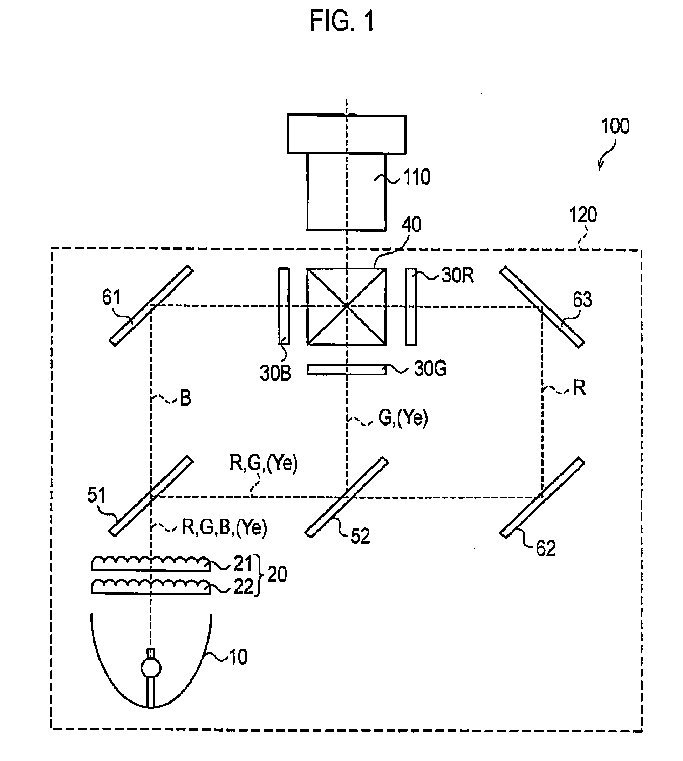

A projection display apparatus of a first embodiment of the present invention is described below with reference to the drawing. Fig. 1 is a diagram showing a projection display apparatus 100 of the first embodiment.

As shown in Fig. 1, the projection display apparatus 100 includes a projection lens unit 110 and a lighting unit 120. It should be noted here that components such as a PBS (Polarized Beam Splitter) aligning the polarizing direction of light emitted from the light source 10 into one direction (a P polarizing direction, for example) are omitted in Fig. 1.

The projection lens unit 110 includes a plurality of lens groups. The projection lens unit 110 projects image light emitted from a lighting unit 120 on a screen (not shown).

The lighting unit 120 includes the light source 10, a fly eye lens unit 20, multiple liquid crystal panels 30 (liquid crystal panels 30R, 30G, and 30B), and a dichroic prism 40.

The light source 10 is a lamp light source such as a UHP lamp. The light source 10 emits light (e.g., white light) including red component light, green component light, blue component light, and yellow component light. The yellow component light is color component light having a waveband between a waveband of red component light and a waveband of green component light. Further, the yellow component light is substitution component light which can be substituted by red component light and green component light.

The fly eye lens unit 20 is formed of fly eye lenses 21 and 22. The fly eye lenses 21 and 22 each include multiple micro-lenses. Each of the multiple micro-lenses condenses light emitted from the light source 10 on the liquid crystal panels 30.

The liquid crystal panel 30R includes a pair of polarizing plates disposed so as to sandwich liquid crystals with the pair of polarizing plates. The liquid crystal panel 30R modulates red component light based on a red output signal. Similarly, the liquid crystal panel 30G and the liquid crystal panel 30B each include a pair of polarizing plates disposed so as to sandwich liquid crystals with the pair of polarizing plates. The liquid crystal panel 30G and the liquid crystal panel 30B modulate green component light and blue component light based on a green output signal and a blue output signal, respectively.

The dichroic prism 40 combines red component light emitted from the liquid crystal panel 30R, green component light emitted from the liquid crystal panel 30G, and blue component light emitted from the liquid crystal panel 30B. The dichroic prism 40 emits light (image light) combined by the dichroic prism 40 to the projection lens unit 110 side.

The lighting unit 120 includes dichroic mirrors 51 and 52, and mirrors 61 to 63.

The dichroic mirror 51 transmits blue component light and reflects red component light and green component light. Here, a cutoff wavelength of the dichroic mirror 51 is provided between a waveband of blue component light and that of green component light.

The dichroic mirror 52 transmits red component light and reflects green component light. Here, a cutoff wavelength of the dichroic mirror 52 is provided between a waveband of green component light and that of red component light.

In the first embodiment, the cutoff wavelength of the dichroic mirror 52 is provided between a waveband of yellow component light Ye and that of red component light. That is, the yellow component light Ye is led to the liquid crystal panel 30G side, along with green component light.

The mirror 61 reflects blue component light to lead it to the liquid crystal panel 30B side. The mirrors 62 and 63 reflect red component light to lead it to the liquid crystal panel 30R side.

(Waveband of Color Component Light)

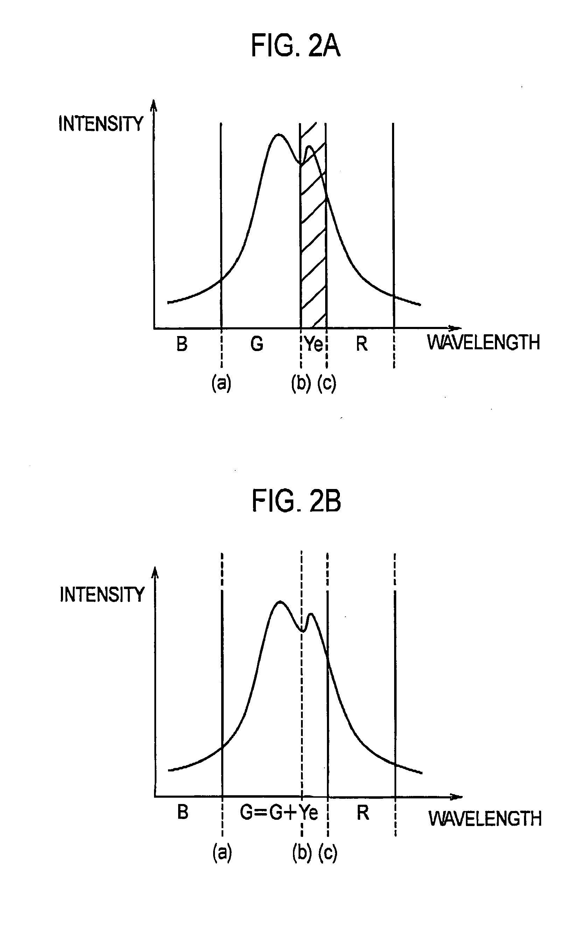

A waveband of color component light of the present embodiment is described below with reference to the drawing. Figs. 2A and 2B are diagrams showing wavebands of color component light of the first embodiment.

As shown in Figs. 2A and 2B, blue component light has a waveband shorter than a wavelength (a). Green component light has a waveband between the wavelength (a) and a wavelength (b). Yellow component light Ye has a waveband between the wavelength (b) and a wavelength (c). Red component light has a waveband longer than the wavelength (c).

In the case where yellow component light Ye is not used, yellow component light Ye is cut as shown in Fig. 2A. In the first embodiment, since the cutoff wavelength of the dichroic mirror 52 is the wavelength (c), yellow component light Ye is cut on a light path of green component light separated by the dichroic mirror 52.

In the case where yellow component light Ye is used, yellow component light Ye is not cut as shown in Fig. 2B. In this embodiment, since the cutoff wavelength of the dichroic mirror 52 is the wavelength (c), yellow component light Ye is superimposed on green component light.

(Color Reproduction Range)

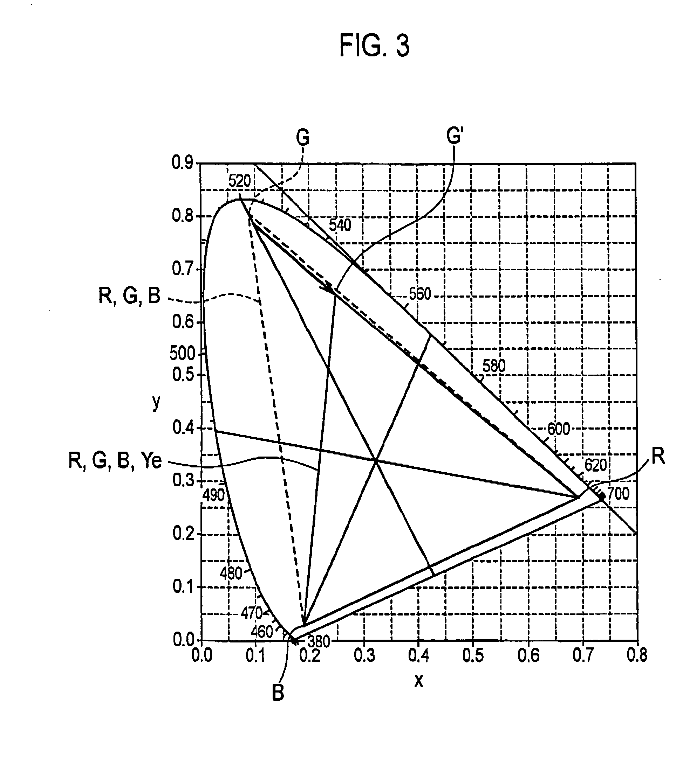

A color reproduction range of the first embodiment is described below with reference to the drawing. Fig. 3 is a diagram showing a color reproduction range of the first embodiment.

As shown in Fig. 3, in the case where yellow component light Ye is not used (Fig. 2A described above), a color reproduction range (R, G, B) of light emitted from the lighting unit 120 is represented by a triangle the vertices of which are points R, G, and B. In contrast, in the case where yellow component light Ye is used (Fig. 2B described above), a color reproduction range (R, G, B, Ye) of light emitted from the lighting unit 120 is represented by a triangle the vertices of which are points R, G', and B.

In this manner, in the case where yellow component light Ye is used, the color reproduction range of light emitted from the lighting unit 120 is basically reduced, compared to the case where yellow component light Ye is not used.

(Functions of the Projection Display Apparatus)

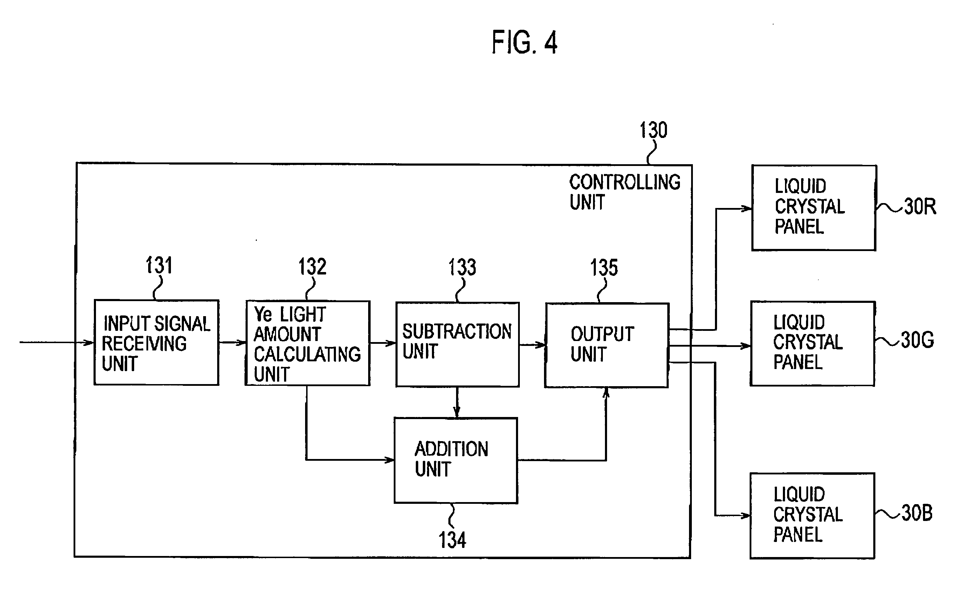

Functions of the projection display apparatus of the first embodiment are described below with reference to the drawing. Fig. 4 is a block diagram showing a controlling unit 130 provided to the projection display apparatus 100 of the first embodiment.

As shown in Fig. 4, the controlling unit 130 includes an input signal receiving unit 131, a light amount specifying unit 132, a subtraction unit 133, an addition unit 134, and an output unit 135.

The input signal receiving unit 131 acquires a red input signal Rin, a green input signal Gin, and a blue input signal Bin. The input signal receiving unit 131 inputs the red input signal Rin, the green input signal Gin, and the blue input signal Bin into the light amount specifying unit 132.

The light amount specifying unit 132 specifies a light amount of yellow component light Ye emitted from the liquid crystal panel 30G. To be more specific, the light amount specifying unit 132 specifies yellow component light Ye emitted from the liquid crystal panel 30G by multiplying a light amount (a maximum light amount) of yellow component light Ye emitted from the light source 10 and the transmittance of the liquid crystal panel 30G. Subsequently, the light amount specifying unit 132 acquires a signal (a virtual signal Ye1) corresponding to the yellow component light Ye emitted from the liquid crystal panel 30G.

Note here that the light amount specifying unit 132 stores, in advance, characteristics of light emitted from the light source 10, and specifies the maximum light amount of yellow component light Ye, depending on power to be applied to the light source 10.

The subtraction unit 133 performs a subtraction process on a red input signal Rin and a green input signal Gin based on the virtual signal Ye1. To be more specific, first, the subtraction unit 133 compares the virtual signal Ye1 with a minimum value (MIN(R, G)). The minimum value (MIN(R, G)) is the input signal having the lower signal intensity between the red input signal Rin and the green input signal Gin.

Subsequently, when the virtual signal $Ye_1 \leq$ the minimum value (MIN(R, G)), the subtraction unit 133 subtracts the virtual signal Ye1 from both the red input signal Rin and the green input signal Gin (refer to Equations (1) and (2)). Meanwhile, when the virtual signal Ye1 > the minimum value (MIN(R, G)), the subtraction unit 133 subtracts the minimum value (MIN(R, G)) from both the red input signal Rin and the green input signal Gin (refer to Equations (3) and (4)).

[Formulae 1]

$$R_1 = R_{in} - Ye_1 \qquad \text{Equation (1)}$$

$$G_1 = G_{in} - Ye_1 \qquad \text{Equation (2)}$$

$$R_1 = R_{in} - MIN(R_{in}, G_{in}) \qquad \text{Equation (3)}$$

$$G_1 = G_{in} - MIN(R_{in}, G_{in}) \qquad \text{Equation (4)}$$

The addition unit 134 performs an addition process on a blue input signal Bin, based on a subtraction result of the subtraction unit 133. To be more specific, first, the addition unit 134 compares the virtual signal Ye1 with a minimum value (MIN(R, G)).

Subsequently, when the virtual signal Ye1 $\leq$ the minimum value (MIN(R, G)), the addition unit 134 does not perform an addition process on the blue input signal Bin (refer to Equation (5)). Meanwhile, when the virtual signal Ye1 > the minimum value (MIN(R, G)), the addition unit 134 performs an addition process on the blue input signal Bin (refer to Equation (6)).

[Formulae 2]

$$B_1 = B_{in} \qquad \text{Equation (5)}$$

$$B_1 = B_{in} + A \times (Ye_1 - MIN(R, G)) \qquad \text{Equation (6)}$$

where A is a predetermined coefficient.

Based on the subtraction result of the subtraction unit 133 and an addition result of the addition unit 134, the output unit 135 generates a red output signal Rout, a green output signal Gout, and a blue output signal Bout. The red output signal Rout, the green output signal Gout, and the blue output signal Bout are respectively the red signal R1, the green signal G1, and the blue signal B1 described above.

(Method of Acquiring the Virtual Signal Ye1)

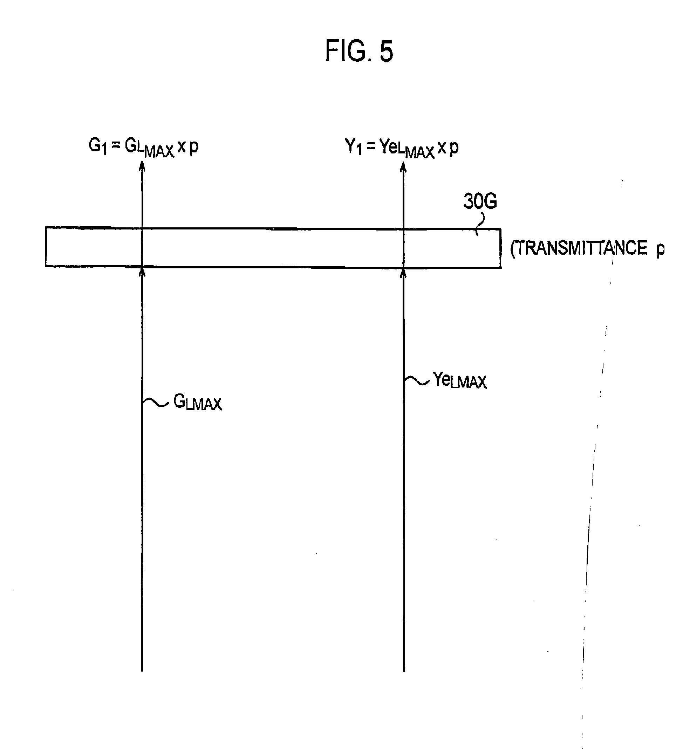

A method of acquiring the virtual signal Ye1 of the first embodiment is described below with reference to the drawing. Fig. 5 is a diagram for describing a method of acquiring the virtual signal Ye1 of the first embodiment.

In Fig. 5, the transmittance of the liquid crystal panel 30G is denoted by "p," an amount (a maximum) of green component light emitted from the light source 10 by "$G_{Lmax}$," a light amount (a maximum light amount) of yellow component light Ye emitted from the light source 10 by "$Ye_{Lmax}$," a light amount of green component light emitted from the liquid crystal panel 30G by "$G_{L1}$," and a light amount of yellow component light Ye emitted from the liquid crystal panel 30G by "$Ye_{L1}$."

In such a case, the light amount $G_{L1}$ and the light amount $Ye_{L1}$ are represented by Equations (7) and (8) below, respectively. Incidentally, the transmittance "p" is a real transmittance determined by the green output signal Gout.

[Formulae 3]

$$G_{L1} = p \times G_{Lmax} \qquad \text{Equation (7)}$$

$$Ye_{L1} = p \times Ye_{Lmax} \qquad \text{Equation (8)}$$

Meanwhile, a desired light amount "$G_{L2}$" of green component light emitted from the liquid crystal panel 30G is represented by Equations (9) and (10). Incidentally, the transmittance "q" is a theoretical transmittance determined by the green input signal Gin.

[Formulae 4]

$$G_{L2} = q \times G_{Lmax} \qquad \text{Equation (9)}$$

$$G_{L2} = G_{L1} + Ye_{L1} \qquad \text{Equation (10)}$$

Incidentally, Equation (9) represents a theoretical desired light amount of green component light in the case where the virtual signal Ye1 is not used. Meanwhile, Equation (10) represents a practical desired light amount of green component light in the case where the virtual signal Ye1 is used.

Use of Equations (9) and (10) enables the derivations of the following Equations (11) and (12).

[Formulae 5]

$$q \times G_{Lmax} = p \ (G_{Lmax} + Ye_{Lmax}) \qquad \text{Equation (11)}$$

$$p = q \times G_{Lmax} \ / \ (G_{Lmax} + Ye_{Lmax}) \qquad \text{Equation (12)}$$

Here, a substitution of Equation (12) into Equation (8) enables the derivation of the following Eq. (13).

[Formulae 6]

$$Ye_{L1} = q \times Ye_{Lmax} \times G_{Lmax} \ / \ (G_{Lmax} + Ye_{Lmax}) \qquad \text{Equation (13)}$$

As described above, being determined by the green input signal Gin, the theoretical transmittance "q" is a given value. Further, being determined by the characteristics of light emitted from the light source 10, the maximum light amount "$G_{Lmax}$" and the maximum light amount "$Ye_{Lmax}$" are also given values.

Therefore, the light amount specifying unit 132 is capable of specifying the light amount "$Ye_{L1}$" on the basis of the green input signal Gin, the maximum light amount "$G_{Lmax}$," and the maximum light amount "$Ye_{Lmax}$." Accordingly, the light amount specifying unit 132 is capable of acquiring the virtual signal Ye1 corresponding to the light amount "$Ye_{L1}$."

(Calculation Examples of Image Output Signals)

Calculation examples of image output signals of the first embodiment are explained below. Below, the virtual signal Ye1 is "80," and considered is a picture element in which signal values (Rin, Gin, Bin) of the red input signal Rin, the green input signal Gin, and the blue input signal Bin are (50, 100, 50).

Incidentally, it is assumed that the virtual signal Ye1 is substitutable by ($R_{out}$, $G_{out}$, $B_{out}$) = (80, 80, 0), and that a coefficient A is "1." It should be noted that the virtual signal Ye1 > the minimum value (MIN(R, G)) is satisfied.

First, the red signal $R_1$ and the green signal $G_1$ are calculated using Equations (3) and (4), respectively.

$$R_1 = R_{in} - MIN(R, G) = 50 - 50 = 0;$$

and

$$G_1 = G_{in} - MIN(R, G) = 100 - 50 = 50.$$

Subsequently, the blue signal $B_1$ is calculated using Equation (6).

$$B_1 = B_{in} + A \times (Ye_1 - MIN(R, G)) = 50 + (80 - 50) = 80.$$

Therefore, signal values ($R_{out}$, $G_{out}$, $B_{out}$) of the red output signal Rout, the green output signal Gout, and the blue output signal Bout are given by (0, 50, 80).

Finally, yellow component light Ye (virtual signal Ye1) emitted from the liquid crystal panel 30G is added. Accordingly, signal values (R, G, B) corresponding to respective color component light emitted from the projection display apparatus 100 are given by (80, 130, 80).

Hues of light reproduced by signal values of red, green, and blue are calculated using Equations (21) to (23) below.

[Formulae 7]

$$H = 60 \times \frac{G - B}{MAX - MIN} + 0 \quad \text{if } (MAX = R) \quad \text{Equation (21)}$$

$$H = 60 \times \frac{B - R}{MAX - MIN} + 120 \quad \text{if } (MAX = G) \quad \text{Equation (22)}$$

$$H = 60 \times \frac{R - G}{MAX - MIN} + 240 \quad \text{if } (MAX = B) \quad \text{Equation (23)}$$

where MAX = MAX(R, G, B), and MIN = MIN(R, G, B).

Here, the hue (H) of an input image signal (50, 100, 50) is calculated using Equation (22). Therefore, the hue (H) of the input image signal (50, 100, 50) is "120."

Similarly, the hue (H) of image light (80, 130, 80) emitted from the projection display apparatus 100 is calculated using Equation (22). Specifically, the hue (H) of the image light (80, 130, 80) is "120."

As described above, not only are the red input signal Rin and the green input signal Gin reduced, but also the blue input signal Bin is increased. This restrains the hue of image light emitted from the projection display apparatus 100 from not matching the hue of an input image signal.

(A First Example of a Comparative Method)

In a first example of a comparative method, the virtual signal Ye1 corresponding to the smaller input signal between a red input signal Rin and a green input signal Gin is subtracted from both the red input signal Rin and the green input signal Gin.

As in the case of the above-described "Calculation Examples of Image Output Signals," considered is a picture element in which signal values (Rin, Gin, Bin) of the red input signal Rin, the green input signal Gin, and the blue input signal Bin are (50, 100, 50). Incidentally, it is assumed that the virtual signal Ye1 is "80," and is substitutable by ($R_{out}$, $G_{out}$, $B_{out}$) = (80, 80, 0).

In the first example of the comparative method, the red output signal Rout, the green output signal Gout, and the blue output signal Bout are as follows.

$$R_{out} = 50 - 50 = 0$$

$$G_{out} = 100 - 50 = 50$$

$$B_{out} = 50$$

In the first example of the comparative method, signal values (R, G, B) corresponding to respective color component light emitted from the projection display apparatus 100 are (80, 130, 50). The hue (H) of image light emitted from the projection display apparatus 100 is calculated using Equation (22). Specifically, the hue (H) of image light (80, 130, 50) is "97.5."

(A Second Example of the Comparative Method)

In the second example of the comparative method, the virtual signal Ye1 is subtracted from both the red input signal Rin and the green input signal Gin as much as possible.

As in the case of the above-described "Calculation Examples of Image Output Signals," considered is a picture element in which signal values (Rin, Gin, Bin) of the red input signal Rin, the green input signal Gin, and the blue input signal Bin are (50, 100, 50). Incidentally, it is assumed that the virtual signal Ye1 is "80," and is substitutable by ($R_{out}$, $G_{out}$, $B_{out}$) = (80, 80, 0).

In the second example of the comparative method, the red output signal Rout, the green output signal Gout, and the blue output signal Bout are as follows.

$$R_{out} = 50 - 50 = 0$$

$$G_{out} = 100 - 80 = 20$$

$$B_{out} = 50$$

In the second example of the comparative method, signal values (R, G, B) corresponding to respective color component light emitted from the projection display apparatus 100 are (80, 100, 50). The hue (H) of image light emitted from the projection display apparatus 100 is calculated using Equation (22). Specifically, the hue (H) of image light (80, 100, 50) is "84."

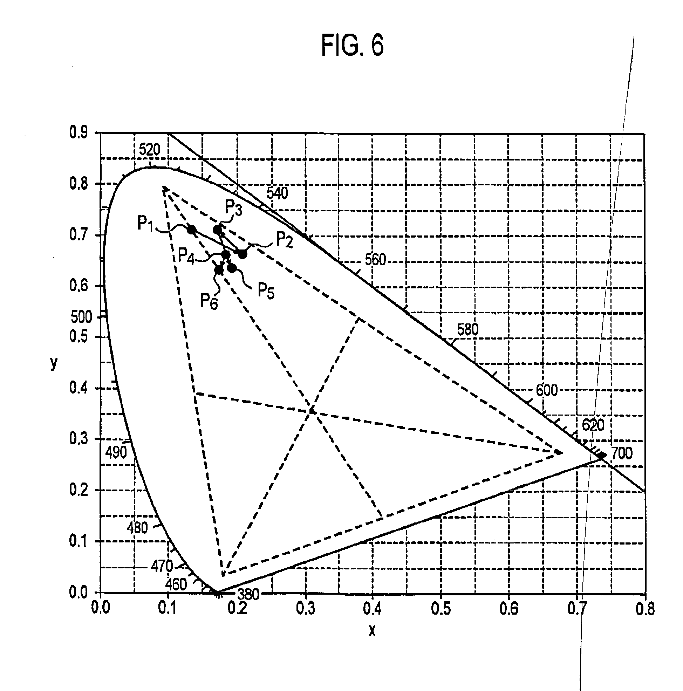

Fig. 6 is a diagram showing a relationship between the comparative method (the first and second examples) and the first embodiment. As shown in Fig. 6, a point $P_1$ (50, 100, 50) corresponding to an image input signal is shifted to a point $P_2$ (130, 180, 50) by a superimposition of yellow component light Ye. A subtraction of the virtual signal Ye1 from the red input signal Rin causes the point $P_2$ (130, 180, 50) to be shifted to a point $P_3$ (80, 180, 50).

In the second example of the comparative method, the virtual signal Ye1 corresponding to the smaller input signal between a red input signal Rin and a green input signal Gin is subtracted from the green input signal Gin. Accordingly, the point $P_3$ (80, 180, 50) is shifted to a point $P_4$ (80, 130, 50).

In the second example of the comparative method, the virtual signal Ye1 is subtracted from the green input signal Gin as much as possible. Accordingly, the point $P_3$ (80, 180, 50) is shifted to a point $P_5$ (80, 100, 50) via the point $P_4$ (80, 130, 50).

In this embodiment, the virtual signal Ye1 corresponding to the smaller input signal between the red input signal Rin and the green input signal Gin is subtracted from the green input signal Gin. Then a part of the virtual signal Ye1 remained without being subtracted from the red input signal Rin and the green input signal Gin is added to the blue input signal Bin. Accordingly, the point $P_3$ (80, 180, 50) is shifted to a point $P_6$ (80, 130, 80) via the point $P_4$ (80, 130, 50).

Here, hue is considered to be a periphery (a line showing a wavelength in a monotonic color) of a chromaticity diagram from a white point WP. A hue corresponding to an image input signal is a vector which goes from the white point WH to a periphery (a neighborhood of 520 nm) of the chromaticity diagram via the point $P_1$.

A hue corresponding to the first example of the comparative method is a vector which goes from the white point WH to a periphery (a neighborhood of 540 nm) of the chromaticity diagram via the point $P_4$. A hue corresponding to the second example of the comparative method is a vector which goes from the white point WH to a periphery (a neighborhood of 550 nm) of the chromaticity diagram via the point $P_5$. A hue corresponding to the first embodiment is a vector which goes from the white point WH to a periphery (a neighborhood of 520 nm) of the chromaticity diagram via the point $P_6$.

According to the first embodiment, as is clear from the above calculation results and Fig. 6, the hue of image light emitted from the projection display apparatus 100 is prevented from not matching a hue of an input image signal, compared to the comparative method.

(Operation and Advantages)

In the first embodiment, the subtraction unit 133 generates a red output signal Rout and a green output signal Gout by performing subtraction processing on a red input signal Rin and a green input signal Gin, based on a light amount of yellow component light Ye (virtual signal Ye1). Therefore, the deterioration of not only color purity but also saturation can be restrained.

In the first embodiment, the addition unit 134 generates a blue output signal Bout by performing addition processing on a blue input signal Bin, based on the subtraction result of the subtraction unit 133. Accordingly, the deterioration of color purity can be further restrained.

[Other Embodiments]

As described above, the present invention has been set forth using the embodiment. However, it should not be understood that the present invention is limited by the discussion and the drawings constituting a part of this disclosure. It is obvious to those skilled in the art that various alternatives, modifications, and the practices can be made based on this disclosure.

For example, on a light path of green component light on which yellow component light Ye is superimposed, an optical apparatus may be provided which selectively switches between the transmission and blocking of yellow component light Ye. For example, an optical device blocking yellow component light Ye may be mechanically put on or removed from the light path of green component light. Alternatively, the light path of green component light may be provided with an optical device which transmits green component light as well as electrically switches between the transmission and blocking of yellow component light Ye.

A light imager is not limited to the transmissive liquid crystal panel 30. A light imager may be a DMD (Digital Micromirror Device) or an LCOS (Liquid Crystal on Silicon).

A cutoff wavelength of the dichroic mirror 52 is not limited to one provided between a waveband of yellow component light Ye and that of red component light. A cutoff wavelength of the dichroic mirror 52 may be provided between a waveband of green component light and that of yellow component light Ye. In this case, yellow component light Ye is superimposed on red component light. Accordingly, the virtual signal Ye1 is acquired based on the red input signal Rin, the maximum light amount "$R_{Lmax}$," and the maximum light amount "$Ye_{Lmax}$."

The method of acquiring the virtual signal Ye1 (light amount "$Ye_{L1}$") is not limited to one in which the real transmittance "p" is considered, i.e., one in which a light amount of yellow component light Ye emitted from the liquid crystal panel 30G is considered. The method of acquiring the virtual signal Ye1 may be one in which only the theoretical transmittance "q" and the maximum light amount "$Ye_{Lmax}$" are considered. The method of acquiring the virtual signal Ye1 may be one in which only the maximum light amount "$Ye_{Lmax}$" is considered.

Further, the fourth color component light is not limited to yellow component light Ye. The fourth color component light may be magenta component light or cyan component light. Magenta component light is light substitutable by red component light and blue component light. Cyan component light is light substitutable by green component light and blue component light.

## Claims

1. An image signal converting apparatus comprising a controlling unit configured to generate an image output signal based on an image input signal, the image signal converting apparatus provided in an image display apparatus having a light source which emits light including red component light, green component light, blue component light, and fourth color component light, wherein

   - the image input signal includes a red input signal corresponding to the red component light, a green input signal corresponding to the green component light, and a blue input signal corresponding to the blue component light,
   - the image output signal includes a red output signal corresponding to the red component light, a green output signal corresponding to the green component light, and a blue output signal corresponding to the blue component light,
   - the fourth color component light is substitutable by substitution component light composed of any two of the red component light, the green component light, and the blue component light, and
   - the controlling unit performs, according to a light amount of the fourth color component light, subtraction processing on a subtraction target signal that is an input signal constituting a part of the image input signal and corresponding to the substitution component light, and the controlling unit generates an output signal constituting a part of the image output signal and corresponding to the substitution component light.

2. The image signal converting apparatus according to claim 1, wherein

   - the controlling unit performs, according to a subtraction result of the subtraction target signals, addition processing on an addition target signal that is an input signal constituting a part of the image input signal and corresponding to color component light other than the substitution component light, and the controlling unit generates an output signal constituting a part of the image output signal and corresponding to the color component light other than the substitution component light.

3. An image display apparatus comprising:

   - a light source configured to emit light including red component light, green component light, blue component light, and fourth color component light;
   - a controlling unit configured to control an image output signal based on an image input signal; and
   - an image display unit configured to display an image based on the image output signal, wherein
   - the image input signal includes a red input signal corresponding to the red component light, a green input signal corresponding to the green component light, and a blue input signal corresponding to the blue component light,
   - the image output signal includes a red output signal corresponding to the red component light, a green output signal corresponding to the green component light, and a blue output signal corresponding to the blue component light,
   - the fourth color component light is substitutable by substitution component light composed of any two of the red component light, the green component light, and the blue component light, and

- the controlling unit performs, according to a light amount of the fourth color component light, subtraction processing on a subtraction target signal that is an input signal constituting a part of the image input signal and corresponding to the substitution component light, and the controlling unit generates an output signal constituting a part of the image output signal and corresponding to the substitution component light.

# FIG. 1

## FIG. 2A

## FIG. 2B

# FIG. 3

# FIG. 4

# FIG. 5

$G_1 = GL_{MAX} \times p$　　　　　　$Y_1 = Yel_{MAX} \times p$

30G

(TRANSMITTANCE p

$\sim Yel_{MAX}$

$\sim GL_{MAX}$

# FIG. 6

**EP 2 068 568 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001186539 A